# FASCICULE DE BREVET EUROPEEN

(11) **EP 0 683 441 B1**
(45) Date de publication et mention de la délivrance du brevet: **23.09.1998**
(21) Numéro de dépôt: 95106903.8
(22) Date de dépôt: 08.05.1995
(51) Int. Cl.: G04C 3/14

(54) **Montre électronique avec fonction répétition minutes**
Elektronische Uhr mit Minutenwiederholungsfunktion
Electronic watch with minute repetition function

(30) Priorité: 20.05.1994 CH 1577/94
(43) Date de publication de la demande: 22.11.1995
(73) Titulaire: Eta SA Fabriques d'Ebauches, 2540 Grenchen (CH)
(72) Inventeur: Berney, Jean-Claude, CH-1343 Les Charbonnières (CH)
(74) Mandataire: Barbeaux, Bernard

(56) Documents cités:
- EP-A- 0 366 422
- EP-A- 0 589 465
- GB-A- 2 012 077
- GB-A- 2 128 379

## Description

L'invention concerne une montre électronique avec fonction répétition minutes, et en particulier une telle montre dans laquelle la fonction répétition minutes est associée à un mouvement caractéristique de ses moyens d'affichage.

La réalisation d'une fonction répétition minutes dans une montre électronique ne pose à priori pas de problèmes majeurs pour autant que l'on dispose, dans le circuit électronique, de moyens de comptage des heures et des minutes, et de moyens pour générer des signaux acoustiques en relation avec ces moyens de comptage des heures et des minutes.

Toutefois, les signaux émis n'ont qu'un lointain rapport avec les timbres subtils et chaleureux utilisés en horlogerie traditionnelle de sorte que ce type de fonction perd une bonne part de son attrait.

D'autre part, on connaît notamment grâce aux documents GB-A-2 128 379 et EP-A-0 366 122, des montres analogiques avec une fonction alarme, dans lesquelles une heure d'alarme est signalée par une mélodie et dans lesquelles l'une au moins des aiguilles est déplacée en synchronisme avec cette mélodie.

Dans le document GB-A-2 128 379 par exemple, lorsque la montre émet une mélodie l'aiguille de seconde se déplace devant une portée ou des touches d'un clavier de piano représentées sur le cadran pour indiquer les différentes notes de cette mélodie, ce qui donne à cette montre un aspect à la fois inhabituel et attrayant.

Enfin, on connaît également, grâce au document EP-A-0 589 465, des pièces d'horlogerie dans lesquelles une aiguille d'heure et une aiguille de minute sont entraînées chacune par un moteur et dans lesquelles le passage d'un mode de fonctionnement horaire à un mode de fonctionnement non-horaire est signalé par un mouvement particulier de l'une au moins des aiguilles, par exemple par un tour complet et rapide de l'aiguille des minutes.

Cela dit, le but de la présente invention n'est pas de recréer une répétition minute à l'ancienne, mais plutôt de profiter des possibilités de la technique moderne pour donner à ce type de fonction un caractère original et attractif pour l'utilisateur.

Ce but est atteint par la montre avec fonction de répétition minutes dont les caractéristiques sont énumérées dans la revendication 1 ou 8.

Ces caractéristiques confèrent effectivement à la montre un caractère visuel original qui la rend esthétiquement plus attractive.

D'autres avantages et caractéristiques de la montre selon l'invention apparaîtront à la lecture de la description qui suit de plusieurs modes de réalisation donnés à titre d'exemples non limitatifs, cette description étant faite en liaison avec les dessins annexés dans lesquels:
- la figure 1 représente schématiquement un premier mode de réalisation de la montre selon l'invention dans lequel l'aiguille de minute effectue des mouvements de va-et-vient en association avec les différents types de signaux acoustiques,
- les figures 2A, 2B, 2C, 2D représentent schématiquement un deuxième mode de réalisation de la montre selon l'invention en symbolisant les mouvements successifs des aiguilles d'heure et minute, ces dernières venant sur un signal de commande, préalablement en position 0 (12 heures), puis retournant à leur position initiale par des mouvements en association avec les différents types de signaux acoustiques,
- la figure 3 représente un schéma d'une partie du circuit électronique de la montre selon les figures 2A à 2D,
- les figures 4A, 4B, 4C représentent schématiquement un troisième mode de réalisation de la montre à répétition minutes selon l'invention dans lequel la fonction répétition minutes est appliquée à l'indication d'une heure d'alarme, et
- la figure 5, représente un schéma d'une partie du circuit électronique de la montre selon les figures 4A-4C.

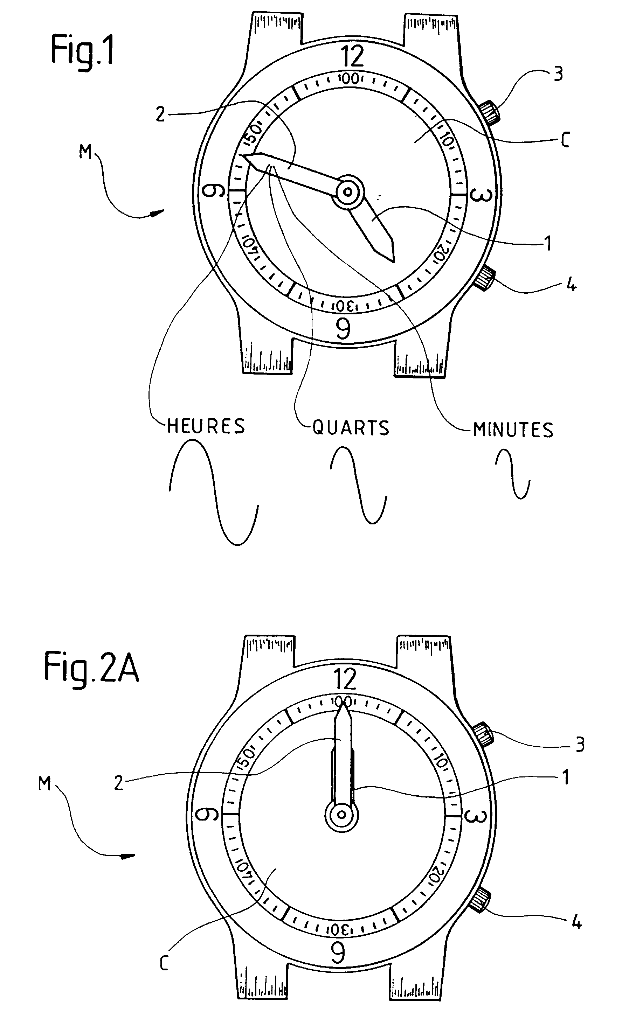

La figure 1 représente schématiquement un premier mode de réalisation d'une montre à répétition minutes M selon l'invention comprenant simplement une aiguille d'heure 1 et une aiguille de minute 2 se déplaçant au dessus d'un cadran C. La montre M comprend un moteur pas à pas pour l'entraînement des aiguilles 1 et 2 et un circuit électronique comprenant entre autres des moyens de comptage des heures et minutes et des moyens pour engendrer des signaux acoustiques de différents types en relation avec ces moyens de comptage.

Pour que les signaux acoustiques engendrés soient en rapport avec les heures et minutes affichées par les aiguilles 1 et 2, il est nécessaire que ces dernières soient synchronisées avec les moyens internes de comptage des heures et minutes. Aussi, cela n'est possible que s'il y a initialisation préalable entre ces deux systèmes. Cette initialisation peut se faire manuellement en amenant les deux aiguilles 1 et 2 à 0 ou en position 12 heures comme cela est représenté à la figure 2A, puis en fournissant un signal d'initialisation, par exemple via une manipulation adéquate de moyens de commande, représentés ici par deux poussoirs 3 et 4. Ces deux poussoirs 3 et 4 servent également à effectuer les opérations de mise à l'heure. On notera que ces opérations doivent être réalisées complètement de façon électrique si l'on veut éviter de créer un déphasage entre les aiguilles et les moyens de comptage internes. La fonction de répétition minutes est également enclenchée par une manipulation adéquate des poussoirs 3 et 4.

Le synchronisme des aiguilles avec les moyens internes de comptage permet de gérer en permanence la position des aiguilles, et notamment de quitter momentanément la position correspondant à l'affichage de l'heure du jour et de revenir dans cette position ultérieurement. Ainsi il est possible, pendant la durée de la fonction répétition minutes, d'associer des mouvements caractéristiques des aiguilles à différents types de signaux acoustiques engendrés par le circuit électronique. On prévoit généralement trois types de signaux acoustiques correspondant respectivement aux sonneries des heures, des quarts et des minutes.

Ainsi, à la figure 1, en admettant que le moteur pas à pas soit du type bidirectionnel, on peut créer des mouvements de va-et-vient de l'aiguille de minute 2. Ces mouvements de va-et-vient peuvent être par exemple de trois amplitudes différentes, correspondant respectivement aux sonneries des heures, des quarts et des minutes.

Dans le cas représenté à la figure 1 dans laquelle l'heure affichée est 4h48, nous aurons donc, lors d'une commande de la fonction répétition minutes via les poussoirs 3 et 4, quatre mouvements de grande amplitude correspondant aux quatre sonneries des heures, trois mouvements de moyenne amplitude correspondant aux trois sonneries des quarts, et trois mouvements de faible amplitude correspondant aux trois sonneries des minutes.

Le fait qu'il n'y ait qu'un seul moteur limite les possibilités de mouvement. C'est pourquoi, pour la suite de la description, nous allons admettre maintenant que les aiguilles des heure et minute 1 et 2 sont indépendantes l'une de l'autre, et sont entraînées chacune par leur propre moteur.

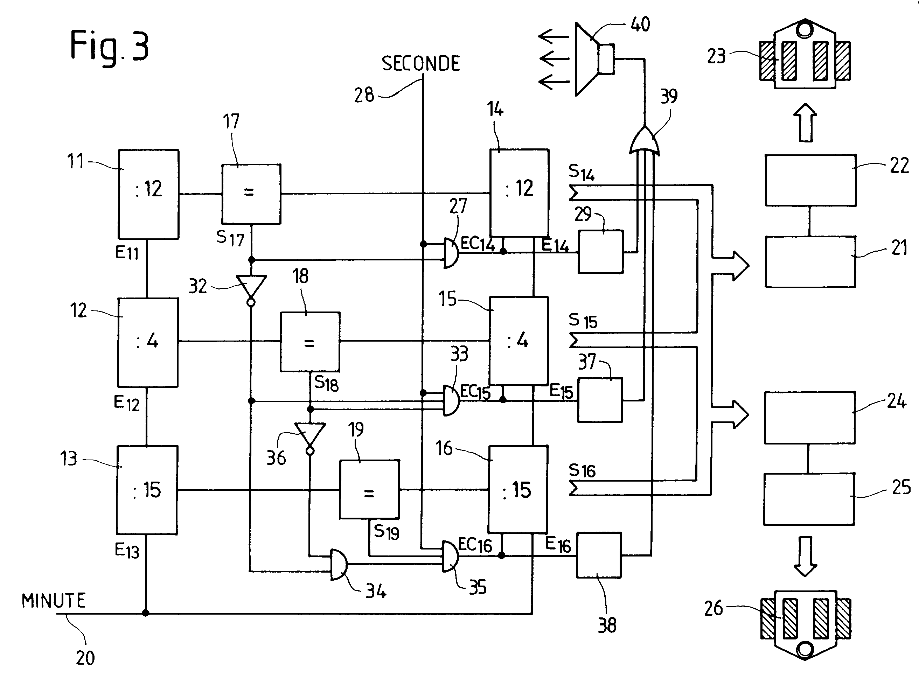

Ainsi, conformément à un deuxième mode de réalisation de la montre selon l'invention, il est possible, par exemple, d'amener les deux aiguilles à 0, comme représenté à la figure 2A, à partir d'une position dans laquelle elles affichent l'heure du jour, en un temps de l'ordre de la seconde lors d'une commande de la fonction répétition minutes, puis de ramener ces aiguilles dans leur position initiale (c'est-à-dire remettre la montre à l'heure) par une succession de mouvements en association avec des signaux acoustiques engendrés par le circuit électronique, représenté à la figure 3.

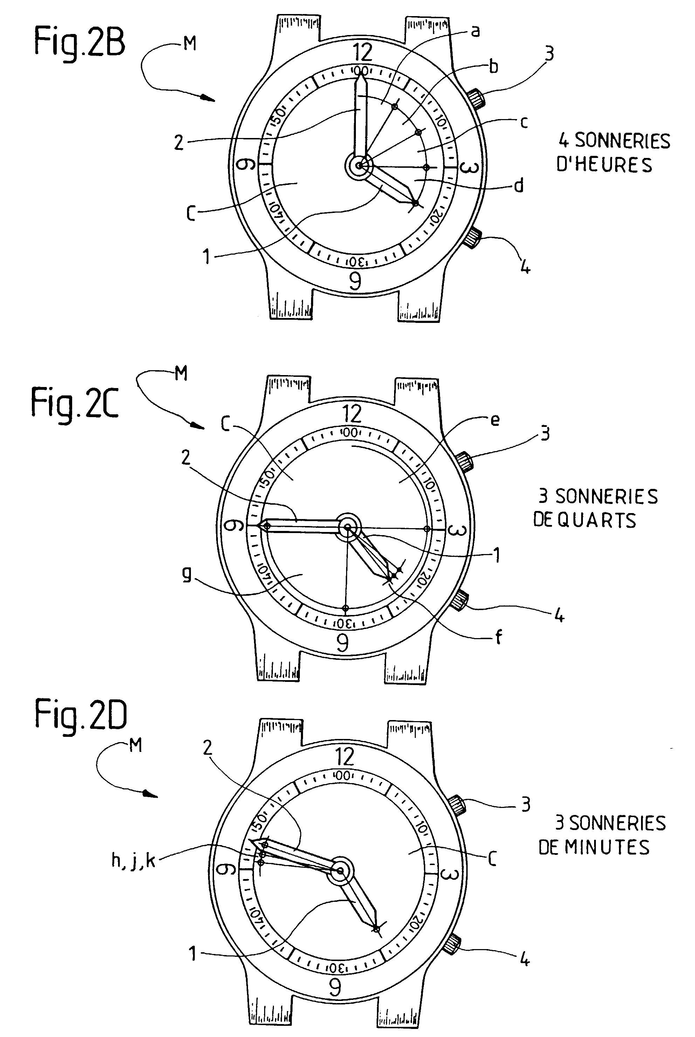

A la figure 2B, on a représenté le déplacement de l'aiguille d'heure 1, à partir de la position 0, par quatre sauts de 1 heure référencés respectivement a, b, c, d et qui correspondent aux quatre sonneries d'heures engendrées par le circuit électronique. Sur la figure 2C, on a représenté le déplacement de l'aiguille de minute 2, à partir de la position 0, par trois sauts de 15 minutes référencés respectivement e, f, g et qui correspondent aux trois sonneries des quarts. Enfin sur la figure 2D, on a représenté le déplacement de l'aiguille de minute 2, à partir de sa dernière position, par trois sauts de 1 minute référencés respectivement h, j, k et qui correspondent aux trois sonneries de minutes. A cet instant, les aiguilles 1 et 2 sont revenues dans leur position initiale et affichent l'heure correcte.

On pourrait évidemment inverser le processus et amener les aiguilles 1 et 2 dans la position 0 par des mouvements en association avec les signaux acoustiques, puis les ramener ensuite automatiquement à l'affichage correct de l'heure après quelques secondes.

Sur la figure 3 est représenté le schéma d'une partie du circuit électronique de la montre des figures 2A-2D. On reconnaît d'abord les moyens de comptage des heures et minutes comportant un premier groupe de compteurs, soit un compteur par 12 pour les heures 11, un compteur par 4 pour les quarts 12 et un compteur par 15 pour les minutes 13.

Le circuit électronique comporte également un deuxième groupe de compteurs configuré de la même manière que le groupe précédent, soit les compteurs par 12, par 4 et par 15 référencés respectivement 14, 15 et 16. Le premier groupe de compteurs 11, 12, et 13 est relié au deuxième groupe de compteurs 14, 15 et 16 par trois circuits de comparaison référencés respectivement 17, 18 et 19, qui délivrent à leurs sorties respectives un signal logique 1 lorsqu'il y a inégalité entre leurs entrées. Les deux groupes de compteurs 11, 12, 13 et 14, 15, 16 reçoivent sur leurs entrées respectives E11, E12, E13, E14, E15, E16 des signaux 20 d'une période d'une minute. Ainsi, normalement, les deux groupes de compteurs 11, 12, 13 et 14, 15, 16 sont synchrones et restent à égalité.

Les sorties S14, S15, et S16 des compteurs 14, 15 et 16 sont reliées à deux tables de correspondance 21 et 24. La première table 21 fixe la position de l'aiguille d'heure 1 sur le cadran C en fonction des états des compteurs 14, 15 et 16. Cette table 21 est reliée à un circuit de positionnement 22 de l'aiguille d'heure 1 sur le cadran C qui délivre des impulsions motrices à un moteur 23, par exemple du type pas à pas, jusqu'à ce que l'aiguille 1 ait atteint la position déterminée par la table 21.

De même, la seconde table 24 fixe la position de l'aiguille de minute 2 sur le cadran C en fonction des états des compteurs 14, 15 et 16. Cette table 24 est reliée à un circuit de positionnement 25 de l'aiguille de minute 2 sur le cadran C qui délivre des impulsions motrices au moteur 26 jusqu'à ce que l'aiguille 2 ait atteint la position déterminée par la table 24.

Regardons maintenant ce qui se passe au niveau du compteur d'heures 14 dans le cas où l'on remet le groupe de compteurs 14, 15 et 16 à 0, et en se référant à l'exemple des figures 2A à 2D. La sortie S17 du circuit de comparaison 17 donne un signal d'inégalité et passe à 1. La sortie S17 va à la première entrée d'une porte ET 27 dont la deuxième entrée reçoit un signal de seconde 28. Ce signal passe alors sur une entrée complémentaire EC14 du compteur 14 et parallèlement sur l'entrée d'un générateur de signaux d'heures 29. La sortie de ce générateur est reliée à une première entrée d'une porte OU 39 dont la sortie alimente un mini haut-parleur 40. Ainsi, à chaque impulsion du signal de seconde 28, le compteur 14 est incrémenté d'un pas et un signal acoustique d'heure est engendré. Après 4 impulsions du signal de seconde, le compteur 14 est revenu à égalité avec le compteur 11, et le processus est interrompu.

Cependant, en passant à 1, la sortie du comparateur 17, par l'intermédiaire de l'inverseur 32, a bloqué la porte ET 33, et la porte ET 35 par l'intermédiaire de la porte ET 34. Les portes ET 33, 34 et 35 fixent ainsi des priorités pour que le compteur 14 soit corrigé en premier, le compteur 15 en deuxième, et le compteur 16 en dernier.

Lorsque le contenu du compteur 14 est revenu à égalité avec le contenu du compteur 11, la sortie S17 du comparateur 17 revient à 0 et la sortie de l'inverseur 32 à 1. La sortie de l'inverseur 32 va sur des entrées des portes ET 33 et 35. Les contenus des compteurs 15 et 12 n'étant pas égaux, les sorties S18 et S19 des comparateurs 18 et 19 sont à 1 et la sortie de l'inverseur 36 à 0. De ce fait, la porte ET 35 reste bloquée, alors que la porte 33 est débloquée, laissant passer les signaux de seconde 28 sur l'entrée complémentaire EC15 du compteur 15 et sur l'entrée d'un deuxième générateur de signaux de quarts 37 dont la sortie va sur une deuxième entrée de la porte OU 39 et ainsi sur le haut-parleur 40. A chaque impulsion du signal de seconde 28, le compteur 15 est ainsi incrémenté d'un pas et un signal acoustique de quarts est engendré. Après 3 impulsions du signal de seconde, le contenu du compteur 15 est revenu à égalité avec le contenu du compteur 12, et le processus est interrompu.

Enfin, comme les contenus des compteurs 15 et 12 sont égaux, et les contenus des compteurs 16 et 13 sont toujours inégaux, les sorties des inverseurs 32 et 36 sont à 1, ce qui fait passer la sortie de la porte ET 34 à 1. La sortie S19 du comparateur 19 étant également à 1, la porte ET 35 laisse passer les impulsions du signal de seconde 28 sur l'entrée complémentaire EC16 du compteur 16 et sur l'entrée d'un troisième générateur 38, de signaux de minute, qui va délivrer ces signaux par la porte OU 39 sur le haut-parleur 40. A chaque impulsion du signal de seconde 28, le compteur 16 est ainsi incrémenté d'un pas et un signal acoustique de minute est engendré. Après trois impulsions du signal de seconde, le contenu du compteur 16 est revenu à égalité avec celui du compteur 13, et le processus est définitivement interrompu puisque les contenus des deux groupes de compteurs sont respectivement maintenant parfaitement égaux, et l'on peut constater que les deux aiguilles 1 et 2 sont revenues dans leur position initiale et indiquent à nouveau l'heure exacte.

Il est bien clair que les signaux acoustiques d'heures, de quarts et de minutes doivent être bien caractérisés de manière que l'utilisateur puisse les reconnaître sans problème.

Il existe bien sûr de nombreuses autres combinaisons possibles, mais leur description n'apporterait rien à la compréhension de l'objet de l'invention. Par exemple, pour les montres ayant plus de deux aiguilles, et ayant des affichages analogiques complémentaires pour l'affichage de fonctions annexes comme la fonction chronographe, on peut créer les mouvements voulus selon l'invention sur ces affichages analogiques complémentaires.

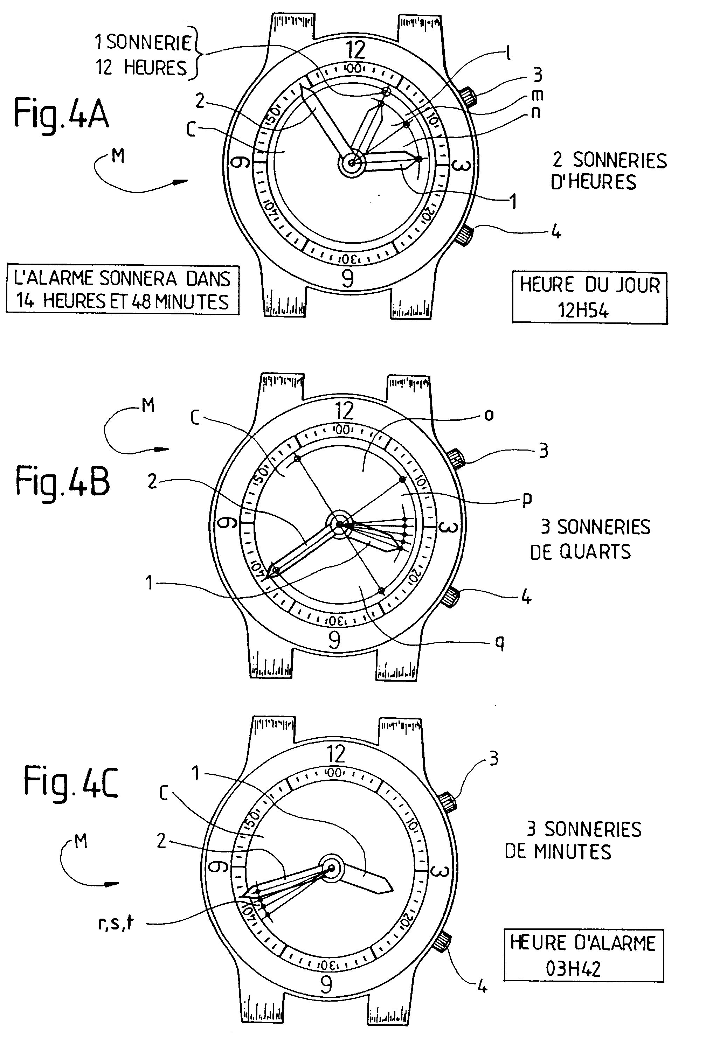

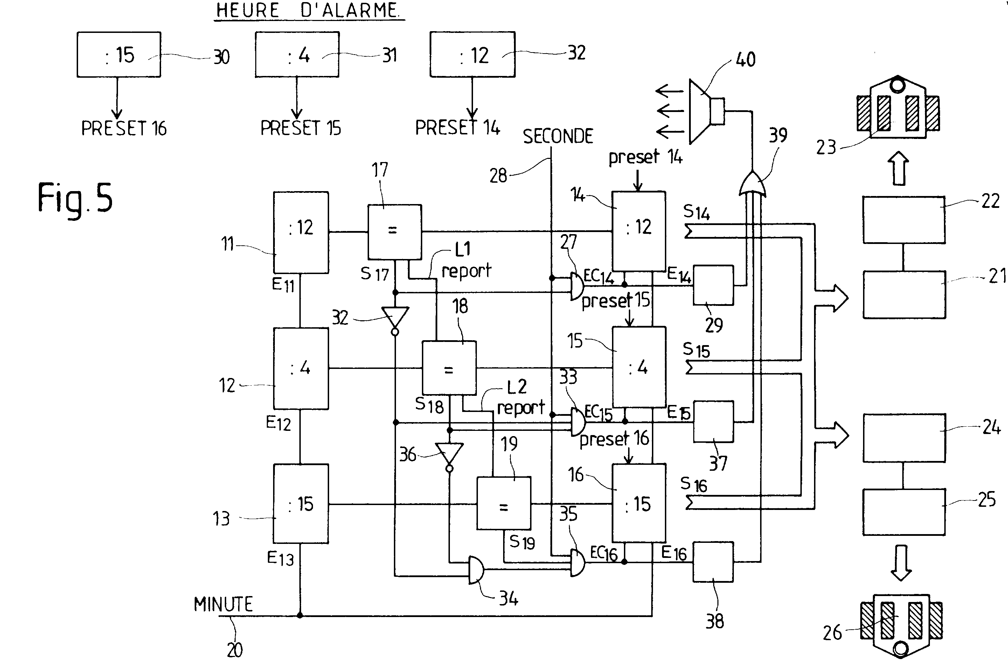

En se référant maintenant aux figures 4 et 5, on voit une représentation d'un troisième mode réalisation d'une montre avec répétition minutes comportant deux aiguilles entraînées par des moteurs indépendants selon l'invention et dans lesquelles les mêmes éléments sont désignés par les mêmes référence numériques.

Selon une caractéristique importante de ce troisième mode de réalisation, la montre M comprend une fonction réveil, et permet, selon l'invention, d'indiquer de façon acoustique le temps qui reste jusqu'à une heure d'alarme programmée.

Dans le deuxième mode de réalisation décrit précédemment en liaison avec les figures 2A-2D, 3, le nombre et la nature des mouvements caractéristiques des aiguilles associés aux signaux acoustiques émis lors d'une manipulation adéquate des poussoirs relèvent de la différence entre la position des aiguilles à l'instant où le poussoir est actionné, c'est à dire lorsqu'elles indiquent l'heure normale Tn et une position de référence dans laquelle les deux aiguilles sont à 0 (dans la position 12H, voir figure 2) et donc de l'équation Tn - 0 = Tn.

Maintenant, ce principe peut être appliqué dans une autre configuration dans laquelle la référence est différente de 0 et est, par exemple, égale à une heure d'alarme préprogrammée.

Selon ce mode de réalisation et dans le cas d'une alarme 24 heures, une sonnerie supplémentaire dite 12 heures ayant une tonalité caractéristique doit être ajoutée. Cette sonnerie correspond à un tour complet de l'aiguille des heures.

Un exemple de mise en oeuvre de ce troisième mode de réalisation de l'invention pour l'indication acoustique du temps encore disponible avant une heure d'alarme préprogrammée va maintenant être décrit ci-après en liaison avec les figures 4A à 4C.

Dans cet exemple, l'heure du jour est 12h54 et l'heure d'alarme programmée est 03h42. L'écart entre l'heure du jour et l'heure d'alarme étant supérieur à 12 heures, la sonnerie 12 heures sera activée.

Lors d'une manipulation adéquate des poussoirs 3 et 4, la sonnerie 12 heures est engendrée, cette sonnerie étant accompagnée d'un déplacement d'un tour complet référencé l de l'aiguille d'heure 1, à partir de sa position dans laquelle elle indique l'heure du jour, puis deux sonneries d'heure avec un déplacement correspondant de l'aiguille d'heure 1 de deux sauts d'une heure référencés respectivement m, n, puis trois sonneries de quarts d'heure avec un déplacement correspondant de l'aiguille de minute 2 de trois sauts de quinze minutes référencés respectivement référencés o, p, q et enfin trois sonneries de minutes avec un déplacement correspondant de l'aiguille de minute 2 de trois sauts d'une minute respectivement référencés r, s, t. Ces différentes sonneries représentent donc 14 heures et 48 minutes, soit le temps qui reste jusqu'à ce que l'alarme s'enclenche.

Le schéma d'une partie du circuit électronique de ce troisième mode de réalisation de la montre selon l'invention est illustré à la figure 5.

Le circuit de commande de ce troisième mode de réalisation se distingue de celui de la figure 3 en ce qu'il comprend trois compteurs d'alarme 30, 31 et 32 supplémentaires respectivement par 15, par 4 et par 12 dans lesquels sont stockés l'heure d'alarme, en ce que les compteurs 14, 15 et 16 sont remplacés par des compteurs du type à présélection, c'est-à-dire comprenant une entrée sur laquelle peut être introduite initialement une valeur prédéterminée, et en ce que les compteurs d'alarme 30, 31 et 32 sont respectivement reliés à l'entrée de présélection (preset) des compteurs 14, 15 et 16.

De plus, afin d'éviter un fonctionnement incorrect du circuit au moment de la comparaison par les comparateurs, 17 ,18 et 19 respectivement entre le contenu des compteurs 11 et 14, et entre le contenu des compteurs 12 et 15, des reports du comparateur 17 vers le comparateur 18 et de ce dernier vers le comparateur 19 ont été introduits. En effet, quand le contenu du compteur 13 est inférieur à celui du compteur 16, il faut soustraire 1 au contenu du comparateur 12 et quand le contenu du compteur 12 est inférieur à celui du compteur 15 il faut soustraire 1 au contenu du compteur 11 , et ceci uniquement au niveau des comparateurs et sans oublier de reporter la valeur soustraite en quarts ou en minutes sur les valeurs des compteurs 12 et/ou 13, ce report est symbolisé par des liaisons L1 et L2 entre respectivement les comparateurs 17 et 18 et les comparateurs 18 et 19.

Ainsi, lors d'une manipulation adéquate des poussoirs 3 et 4, le contenu des compteurs d'alarme 30, 31 et 32 est transféré dans les compteurs 14, 15 et 16 puis comparé respectivement aux contenus des compteurs 11, 12 et 13. En d'autres termes il faut procéder à une soustraction de l'heure d'alarme à l'heure du jour et transposer le résultat de cette différence en heures entières, en quarts et en minutes afin d'associer ce résultat aux sonneries et/ou aux mouvements de la fonction répétition minutes.

Par exemple, si l'heure du jour est 11h42 les compteurs d'heures 11, 12 et 13 contiennent respectivement les valeurs suivantes 11, 2 et 12 et si l'heure d'alarme est 10h58, les compteurs d'alarme après le transfert dans les compteurs 14, 15 et 16 contiennent respectivement les valeurs suivantes: 10, 3, et 13. Comme le contenu du compteur 13 est inférieur au contenu du compteur 16 on va soustraire 1 au contenu du compteur 12 et comme le contenu du compteur 12 est inférieur au contenu du compteur 15, on va soustraire 1 au contenu du compteur 11. Il va de soi que ces deux soustractions s'accompagnent d'un report de 15 et de 4 respectivement dans les compteurs 13 et 12 et ceci au niveau des comparateurs uniquement. La soustraction est donc la suivante:

| | HEURES | QUARTS | MINUTES |
|---|---|---|---|
| Heure du jour A | 11 | 2 | 12 |
| Heure d'alarme B | 10 | 3 | 13 |
| | | | |
| A avec report = A' | 11-1 = 10 | 2-1+4 = 5 | 12+15 = 27 |
| | | | |
| A' - B = C | 10-10 = 0 | 5-3 = 2 | 27-13 = 14 |

Le résultat C de la soustraction de l'heure d'alarme à l'heure du jour et par conséquent le temps qui reste avant l'heure d'alarme est ainsi donné, sous forme d'heures, de quarts et de minutes. Dans cet exemple, le circuit électronique de la montre ne va pas engendrer de sonnerie d'heure mais va engendrer deux sonneries de quart et 14 sonneries de minute.

Bien entendu, dans le cas d'une alarme 12 heures, la sonnerie 12 heures est omise, et le principe décrit ci-dessus reste le même.

Selon une variante avantageuse, le circuit de commande peut être agencé pour que lorsque la fonction alarme est déclenchée, les sonneries soient déclenchées et que seuls les mouvements caractéristiques des aiguilles soient commandés en réponse à une manipulation des poussoirs. Au contraire, lorsque la fonction alarme est enclenchée, les mouvements des aiguilles sont associés aux sonneries correspondantes en réponse à une manipulation des poussoirs. De cette façon, on assure de manière attractive le contrôle de l'état marche/arrêt de la fonction alarme.

Aussi, plutôt que des sauts de quinze minutes, on pourrait utiliser des sauts de dix minutes, ce qui faciliterait le comptage des minutes.

Selon une autre variante, le circuit de commande peut être agencé pour inverser le processus en changeant le sens de rotation des aiguilles. Dans ce cas, on déplacera préalablement les aiguilles d'heure et de minute pour afficher l'heure d'alarme, soit 03h42, puis on reviendra à l'heure du jour en arrière en générant les sonneries correspondantes. Cette variante présente l'avantage de pouvoir vérifier immédiatement l'heure d'alarme.

## Revendications

1. Montre avec fonction de répétition minutes comportant des moyens de commande (3, 4), une aiguille d'heure (1) et une aiguille de minute (2) entraînées par au moins un moteur pas à pas (23, 26) pour afficher l'heure du jour lorsqu'elles se trouvent dans une position normale et un circuit électronique comportant des moyens de comptage des heures et des minutes (11-13, 14-16) et des moyens (29, 37-40) pour générer des signaux acoustiques d'heures et de minutes en relation avec ces moyens de comptage et en réponse à une manipulation adéquate des moyens de commande, caractérisée par le fait que ledit circuit électronique est agencé pour agir sur lesdites aiguilles d'heure et de minute (1, 2) de façon que l'aiguille d'heure (1) effectue des mouvements caractéristiques lorsque lesdits signaux acoustiques sont en relation avec les heures et que l'aiguille de minute (2) effectue des mouvements caractéristiques lorsque lesdits signaux acoustiques sont en relation avec les minutes.

2. Montre selon la revendication 1, caractérisée par le fait que ledit circuit électronique est agencé pour agir sur lesdites aiguilles d'heure (1) et de minute (2) de façon que, en réponse à ladite manipulation adéquate des moyens de commande (3, 4), ces aiguilles passent de ladite position normale à une position de référence et reviennent ensuite à ladite position normale et que lesdites aiguilles effectuent des mouvements caractéristiques en association avec lesdits signaux acoustiques d'heures et de minutes lorsqu'elles passent de ladite position normale à ladite position de référence ou lorsqu'elles reviennent à ladite position normale.

3. Montre selon la revendication 2, caractérisée par le fait que ladite position de référence est celle dans laquelle lesdites aiguilles d'heure et de minute (1, 2) sont à 0.

4. Montre selon la revendication 2, caractérisée par le fait que ladite position de référence est celle dans laquelle lesdites aiguilles d'heure et de minute (1, 2) affichent une heure d'alarme préprogrammée.

5. Montre selon l'une quelconque des revendications 2 à 4, caractérisée par le fait que ledit circuit électronique comprend également des moyens de comptage des quarts d'heure (12, 15), que les moyens (29, 37-40) pour générer lesdits signaux acoustiques d'heures et de minutes sont conçus pour générer aussi des signaux acoustiques de quarts et que ledit circuit électronique est agencé pour agir sur l'aiguille de minute (2) de façon que cette aiguille effectue également des mouvements caractéristiques en association avec ces signaux acoustiques de quarts lorsque les aiguilles passent de ladite position normale à ladite position de référence ou inversement.

6. Montre selon l'une quelconque des revendications 2 à 4, caractérisée par le fait que lesdites aiguilles d'heure et de minute (1, 2) sont indépendantes l'une de l'autre et entraînée chacune par son propre moteur (23, 26).

7. Montre selon les revendications 5 et 6, caractérisée par le fait que les mouvements caractéristiques des aiguilles d'heure et de minute (1, 2) consistent, pour l'aiguille d'heure (1), à effectuer un saut de une heure chaque fois qu'un signal acoustique d'heures est généré et, pour l'aiguille de minute (2), à effectuer un saut de quinze minutes pour chaque signal acoustique de quarts et un saut de une minute pour chaque signal acoustique de minutes.

8. Montre avec fonction de répétition minutes comportant des moyens de commande (3, 4), un circuit électronique et des moyens d'affichage (1, 2) entraînés par au moins un moteur pas à pas, ledit circuit électronique comprenant au moins des moyens de comptage des heures et des minutes et des moyens pour générer des signaux acoustiques d'heures et de minutes en relation avec ces moyens de comptage des heures et des minutes et en réponse à une manipulation adéquate des moyens de commande (3, 4), caractérisée par le fait que ledit circuit électronique est agencé de manière à agir sur lesdits moyens d'affichage (1, 2) de manière à créer des mouvements de va-et-vient d'amplitudes distinctes de ces moyens d'affichage, en association avec lesdits signaux acoustiques d'heures et de minutes.

9. Montre selon la revendication 8, caractérisée par le fait que ledit circuit électronique comprend également des moyens de comptage des quarts d'heure, que les moyens pour générer lesdits signaux acoustiques d'heures et de minutes sont conçus pour générer aussi des signaux acoustiques de quarts et que ledit circuit électronique est agencé pour agir sur lesdits moyens d'affichage (1, 2) de manière à créer également des mouvements de va-et-vient de ces derniers en association avec lesdits signaux acoustiques de quarts, l'amplitude de ces mouvements étant comprise entre celles des mouvements de va-et-vient associés audits signaux acoustiques d'heures et de minutes.

## Patentansprüche

1. Uhr mit Minutenwiederholungsfunktion umfassend Steuermittel (3, 4), einen Stundenzeiger (1) und einen Minutenzeiger (2), die durch wenigstens einen Schrittmotor (23, 26) angetrieben sind, um die Tageszeit anzuzeigen, wenn sie sich in einer normalen Position befinden, und einen elektronischen Schaltkreis umfassend Mittel zum Zählen von Stunden und Minuten (11-13, 14-16) und Mittel (29, 37-40) zum Erzeugen von akustischen Signalen von Stunden und Minuten in Relation zu diesen Mitteln zum Zählen und in Ansprache auf eine adäquate Betätigung von Steuermitteln, dadurch gekennzeichnet, daß der elektronische Schaltkreis ausgebildet ist, um auf die Stunden- und Minutenzeiger (1, 2) derart einzuwirken, daß der Stundenzeiger (1) charakteristische Bewegungen ausführt, wenn die akustischen Signale in Relation zu den Stunden sind, und daß der Minutenzeiger (2) charakteristische Bewegungen ausführt, wenn die akustischen Signale mit den Minuten in Relation sind.

2. Uhr nach Anspruch 1, dadurch gekennzeichnet, daß der elektronische Schaltkreis zum Einwirken auf die Stunden- und Minutenzeiger (1, 2) derart ausgebildet ist, daß in Ansprache auf die adäquate Betätigung von Steuermitteln (3, 4) diese Zeiger von der normalen Position in eine Bezugsposition laufen und dann in die normale Position zurückkehren und daß die Zeiger charakteristische Bewegungen im Zusammenhang mit den akustischen Stunden- und Minutensignalen durchführen, wenn sie von der normalen Position in die Bezugsposition laufen oder wenn sie in die normale Position zurückkehren.

3. Uhr nach Anspruch 2, dadurch gekennzeichnet, daß die Bezugsposition diejenige ist, in der die Stunden- und Minutenzeiger (1, 2) auf 0 stehen.

4. Uhr nach Anspruch 2, dadurch gekennzeichnet, daß die Bezugsposition diejenige ist, in der die Stunden- und Minutenzeiger (1, 2) eine vorprogrammierte Alarmstunde anzeigen.

5. Uhr nach einem der Ansprüche 2 bis 4, dadurch gekennzeichnet, daß der elektronische Schaltkreis ferner Mittel zum Zählen von Viertelstunden (12, 15) umfaßt, daß die Mittel (29, 37-40) zum Erzeugen der akustischen Stunden- und Minutensignale ausgebildet sind, um auch akustische Signale von Viertelstunden zu erzeugen, und daß der elektronische Schaltkreis eingerichtet ist, um auf den Minutenzeiger (2) derart einzuwirken, daß dieser Zeiger auch charakteristische Bewegungen im Zusammenhang mit diesen akustischen Signalen für Viertelstunden durchführt, wenn die Zeiger von der normalen Position in die Bezugsposition oder umgekehrt laufen.

6. Uhr nach einem der Ansprüche 2 bis 4, dadurch gekennzeichnet, daß die Stunden- und Minutenzeiger (1, 2) voneinander unabhängig und jeweils durch ihren eigenen Motor (23, 26) angetrieben sind.

7. Uhr nach den Ansprüchen 5 und 6, dadurch gekennzeichnet, daß die charakteristischen Bewegungen der Stunden- und Minutenzeiger (1, 2) für den Stundenzeiger (1) darin bestehen, einen Sprung von einer Stunde jedesmal durchzuführen, wenn ein akustisches Stundensignal erzeugt wird, und für den Minutenzeiger (2) darin, einen Sprung von fünfzehn Minuten für jedes akustische Viertelstundensignal und einen Sprung von einer Minute für jedes akustische Minutensignal durchzuführen.

8. Uhr mit Minutenwiederholungsfunktion umfassend Steuermittel (3, 4), einen elektronischen Schaltkreis und Anzeigemittel (1, 2), die durch wenigstens einen Schrittmotor angetrieben sind, wobei der elektronische Schaltkreis wenigstens Mittel zum Zählen von Stunden und Minuten und Mittel zum Erzeugen von akustischen Stunden- und Minutensignalen in Relation zu diesen Mitteln zum Zählen von Stunden und Minuten und in Ansprache auf eine adäquate Betätigung von Steuermitteln (3, 4) umfaßt, dadurch gekennzeichnet, daß der elektronische Schaltkreis derart ausgebildet ist, daß er auf die Anzeigemittel (1, 2) derart einwirkt, daß Hin- und Herbewegungen mit bestimmter Amplitude dieser Anzeigemittel im Zusammenhang mit den akustischen Stunden- und Minutensignalen erzeugt werden.

9. Uhr nach Anspruch 8, dadurch gekennzeichnet, daß der elektronische Schaltkreis ferner Mittel zum Zählen von Viertelstunden umfaßt, daß die Mittel zum Erzeugen der akustischen Stunden- und Minutensignale ausgebildet sind, um auch akustische Viertelstundensignale zu erzeugen, und daß der elektronische Schaltkreis eingerichtet ist, um auf die Anzeigemittel (1, 2) derart einzuwirken, daß auch Hin- und Herbewegungen dieser letzteren im Zusammenhang mit den akustischen Viertelstundensignalen erzeugt werden, wobei die Amplitude dieser Bewegungen zwischen denjenigen der Hin- und Herbewegungen liegt, die den akustischen Stunden- und Minutensignalen zugeordnet sind.

## Claims

1. Watch with a minute-repeater function comprising control means (3, 4), an hour hand (1) and a minute hand (2) driven by at least one stepping motor (23, 26) in order to display the hour of the day when they are in a normal position and an electronic circuit comprising counting means of hours and minutes (11-13, 14-16) and means (29, 37-40) for generating acoustic signals of hours and minutes in connection with said hour and minute counting means and in response to an appropriate manipulation of the control means, characterized in that said electronic circuit is arranged so as to act on said hour and minute hands (1, 2) so that the hour hand (1) performs characteristic movements when said acoustic signals are in connection with the hours and that the minute hand (2) performs characteristic movements when said acoustic signals are in connection with the minutes.

2. Watch according to claim 1, characterized in that said electronic circuit is arranged to act on said hour and minute hand (1, 2) so that, in response to said appropriate manipulation of the control means (3, 4), these hands move from said normal position to a reference position and thereafter return to said normal position and in that said hands perform characteristic movements in connection with said acoustic hour and minute signals when they move from said normal position to said reference position or when they return to said normal position.

3. Watch according to claim 2, characterized in that said reference position is that at which said hour and minute hand (1, 2) are at 0.

4. Watch according to claim 2, characterized in that said reference position is that at which said hour and minute hand indicate a pre-programmed alarm time.

5. Watch according to any one of claims 2 to 4, characterized in that said electronic circuit further comprises counting means of quarter hours (12, 15), in that the means (29, 37, 40) for generating said acoustic hour and minute signals are conceived to also generate acoustic quarters signals and in that said electronic circuit is arranged to act on said minute hand (2) so that this hand also performs characteristic movements in connection with these acoustic quarters signals when the hands move from said normal position to said reference position and inversely.

6. Watch according to any one of claims 2 to 4, characterized in that said hour and minute hands (1, 2) are independent of each other and are each driven by their own motor (23, 26).

7. Watch according to claims 5 and 6, characterized in that the characteristics movements of the hour and minute hands (1, 2) consist in performing, for the hour hand (2), a jump of an hour each time that an acoustic hour signal is generated and, for the minute hand (2), a jump of 15 minutes for each acoustic quarters signal and a jump of one minute for each acoustic minute signal.

8. Watch with a minute-repeater function comprising control means (3, 4), an electronic circuit, and display means (1, 2) driven by at least one stepping motor, said electronic circuit comprising at least hour and minute counting means and means for generating acoustic hour and minute signals in connection with said hour and minute counting means and in response to an appropriate manipulation of the control means (3, 4), characterized in that said electronic circuit is arranged so as to act on said display means (1, 2) so as to create to-and-fro movements of distinct amplitudes of these display means in association with said hour and minute acoustic signals.

9. Watch according to claim 8, characterized in that said electronic circuit further comprises counting means of quarter hours, in that the means for generating said acoustic hour and minute signal are conceived to also generate acoustic quarters signals and in that said electronic circuit is arranged to act on said display means (1, 2) so as to also create to-and-fro movements of these means in association with said acoustic quarters signals, the amplitude of these movements being comprised within those of the to-an-fro movements associated with said acoustic hour and minute signals.
